# EUROPEAN PATENT APPLICATION

(11) **EP 4 656 928 A1**
(43) Date of publication of application: **03.12.2025**
(21) Application number: 24887740.9
(22) Date of filing: 21.10.2024
(51) Int. Cl.: F16M 11/40, F16M 11/04, F16B 47/00, G09F 9/30

(54) **FLEXIBLE SUPPORT STRUCTURE AND FLEXIBLE DISPLAY DEVICE**

(30) Priority: 10.11.2023 CN 202311499905
(71) Applicant: Boe Technology Group Co., Ltd., Beijing 100015 (CN)
(72) Inventor: CHU, Shangchieh, Beijing 100176 (CN); WANG, Xinyu, Beijing 100176 (CN); YANG, Yanyan, Beijing 100176 (CN); WANG, Haoran, Beijing 100176 (CN)
(74) Representative: Studio Torta S.p.A.
(86) International application number: PCT/CN2024/126198
(87) International publication number: WO 2025/098127

(57) **Abstract**

The disclosure provides a flexible support structure and a flexible display device. The flexible support structure is for supporting and sucking a flexible display panel when the flexible display panel is unfolded. The flexible support structure comprises a substrate layer and a suction layer disposed on the substrate layer, the suction layer comprises a base and a plurality of suction cup microstructures protruding from the base in a direction away from the substrate layer, each suction cup microstructure has a concave portion concaving toward the substrate layer at an end away from the base.

## Description

### RELATED APPLICATION

The present application claims the benefit of Chinese Patent Application No. 202311499905.3, filed on November 10, 2023, the entire disclosure of which is incorporated herein by reference.

### TECHNICAL FIELD

The present disclosure relates to the display technology, especially a flexible support structure and a flexible display device comprising the flexible support structure.

### BACKGROUND

The development of flexible display technology has greatly promoted the development of display technology towards a more lightweight and diversified direction. In recent years, with the development of windable flexible display screens, windable flexible display devices have been proposed, in which the display screen wound on a scroll can be unfolded outward for use when needed. The windable flexible display device has become one of the hotspots in the future development of display technology due to its ability to roll up the flexible display screen, which can maximize space saving and facilitate user portability.

### SUMMARY

According to an aspect of the present disclosure, a flexible support structure is provided for supporting and sucking a flexible display panel when the flexible display panel is unfolded. The flexible support structure comprises a substrate layer and a suction layer disposed on the substrate layer, wherein the suction layer comprises a base and a plurality of suction cup microstructures protruding from the base in a direction away from the substrate layer, each suction cup microstructure having a concave portion concaving toward the substrate layer at an end away from the base.

In some embodiments, a size of the suction cup microstructure at the end away from the base is larger than a size of the suction cup microstructure at an end close to the base, or the size of the suction cup microstructure at the end away from the base is smaller than the size of the suction cup microstructure at the end close to the base, or the suction cup microstructure has a constant size in a direction perpendicular to the base.

In some embodiments, a depth of the concave portion of the suction cup microstructure is less than or equal to a height of the suction cup microstructure.

In some embodiments, the suction layer is made of silicone or rubber material, with an elastic modulus of 1MPa-10MPa and a thickness of 50µm-200µm.

In some embodiments, an outer diameter of each suction cup microstructure is 20µm-100µm, and a center distance between adjacent suction cup microstructures is 50µm-150µm.

In some embodiments, the plurality of suction cup microstructures are uniformly distributed throughout the entire suction layer.

In some embodiments, the flexible support structure further comprises a spacer layer arranged between the substrate layer and the suction layer, wherein the spacer layer is made of foam, PET film or PI film, and has a thickness of 25µm-100µm.

In some embodiments, the flexible support structure further comprises a first bonding layer arranged between the suction layer and the spacer layer, wherein a thickness of the first bonding layer is 30µm-100µm.

In some embodiments, the first bonding layer comprises a silicon-based adhesive film, the silicon-based adhesive film being in direct contact with the suction layer, and has a peeling force greater than 1200gf/25mm between the silicon-based adhesive film and the suction layer; a PET film layer, arranged on a side of the silicon-based adhesive film facing away from the suction layer; and an acrylic adhesive film is arranged on a side of the PET film layer facing away from the silicon-based adhesive film and in direct contact with the spacer layer.

In some embodiments, the flexible support structure further comprises a mesh plate layer arranged on a side of the substrate layer away from the suction layer.

In some embodiments, the mesh plate layer comprises: a plurality of strip-shaped portions arranged at intervals along a first direction, with each strip-shaped section extending along a second direction perpendicular to the first direction, the first direction being the winding direction of the flexible support structure; a plurality of connecting portions arranged between adjacent strip-shaped portions for connecting adjacent strip-shaped portions; a plurality of first openings arranged between adjacent strip-shaped portions and connecting portions, each first opening extending along a second direction; and a plurality of second openings arranged in the plurality of connecting portions, each second opening extending along a second direction, the plurality of second openings being staggered with the plurality of first openings.

In some embodiments, a width of each strip-shaped portion in the first direction is 0.4mm-1.0mm, and a spacing between adjacent strip-shaped portions is 1.0mm-2.0mm.

In some embodiments, a side of the connecting portion facing away from the substrate layer is etched, and a thickness of the connecting portion is 40% -50% of a thickness of the strip-shaped portion.

In some embodiments, a length of the first opening in the second direction is 6mm-14mm, and a length of the second opening in the second direction is 6mm-14mm.

In some embodiments, a width of the connecting portion between adjacent two first openings is 0.2mm-0.5mm, and a width of the connecting portion between adjacent two second openings is 0.2mm-0.5mm.

In some embodiments, a material of the mesh plate layer is stainless steel or titanium alloy, the tensile strength is greater than 450MPa, and the thickness is 0.1mm-0.4mm.

In some embodiments, the flexible support structure further comprises a protective layer arranged on a side of the substrate layer away from the suction layer.

In some embodiments, the protective layer is made of foam material with a thickness of 30µm-100µm.

According to another aspect of the present disclosure, there is also provided a flexible display device comprising: a housing, provided with an opening; a first scroll, rotatably arranged in the housing; a second scroll, rotatably arranged in the housing, the second scroll being parallel and spaced apart from the first scroll; a flexible display panel, a first end of the flexible display panel being connected to the first scroll and wound around the first scroll; and a flexible support structure according to any one of claims 1-18, wherein a first end of the flexible support structure is connected to the second scroll and wound around the second scroll; wherein the flexible display panel and the flexible support structure are configured to make the suction layer of the flexible support structure gradually adhere to the flexible display panel to support and suck the flexible display panel when the flexible display panel and the flexible support structure unfolded from the opening to the outside of the housing.

In some embodiments, the flexible display device further comprises a roller group arranged at a junction of a winding area and a flattening area, wherein the roller group is configured to uniformly suck the suction layer of the flexible support structure and the entire surface of the flexible display panel by rolling the roller group when the flexible display panel and the flexible support structure unfolded from the opening to the outside of the housing.

In some embodiments, the roller group is further configured to control the adhesion force between the flexible display panel and the flexible support structure by adjusting the position of the roller group in a direction perpendicular to the flexible display panel when the flexible display panel and the flexible support structure are unfolded from the opening to the outside of the housing.

In some embodiments, the roller group is further configured to control the separation angle between the flexible display panel and the flexible support structure by adjusting the position of the roller group in a direction parallel to the flexible display panel when the flexible display panel and the flexible support structure are rolled up from the opening into the housing, thereby controlling the separation force between the flexible display panel and the flexible support structure.

In some embodiments, when the flexible display panel and the flexible support structure are rolled up from the opening into the housing, the separation angle between the flexible display panel and the flexible support structure is greater than 10 degrees.

In some embodiments, the roller group comprises a plurality of rollers arranged in a direction parallel to the first scroll and second scroll.

In some embodiments, a material of the rotary drums of the plurality of rollers is POM or metal.

### BRIEF DESCRIPTION OF THE DRAWINGS

In order to more clearly illustrate the technical solutions in embodiments of the disclosure, the appended drawings needed to be used in the description of the embodiments will be introduced briefly in the following. Obviously, the drawings in the following description are only some embodiments of the disclosure, and for those of ordinary skills in the art, other drawings may be obtained according to these drawings under the premise of not paying out creative work.
Fig. 1 shows a schematic cross-sectional view of a flexible support structure provided according to an embodiment of the present disclosure;
Fig. 2A shows a schematic cross-sectional view of the suction layer of the flexible support structure provided according to an embodiment of the present disclosure;
Fig. 2B shows a schematic cross-sectional view of the suction layer of the flexible support structure provided according to an embodiment of the present disclosure;
Fig. 2C shows a schematic cross-sectional view of the suction layer of the flexible support structure provided according to an embodiment of the present disclosure;
Fig. 2D shows a schematic cross-sectional view of the suction layer of the flexible support structure provided according to an embodiment of the present disclosure;
Fig. 2E shows a schematic cross-sectional view of the suction layer of the flexible support structure provided according to an embodiment of the present disclosure;
Fig. 2F shows a schematic cross-sectional view of the suction layer of the flexible support structure provided according to an embodiment of the present disclosure;
Fig. 2G shows a schematic cross-sectional view of the suction layer of the flexible support structure provided according to an embodiment of the present disclosure;
Fig. 2H shows a schematic cross-sectional view of the suction layer of the flexible support structure provided according to an embodiment of the present disclosure;
Fig. 3 shows a schematic cross-sectional view of the first bonding layer of the flexible support structure provided according to an embodiment of the present disclosure;
Fig. 4 shows a top view schematic of the mesh plate layer of the flexible support structure provided according to an embodiment of the present disclosure;
Fig. 5 shows a schematic diagram of the unfolded state of the flexible display device provided according to an embodiment of the present disclosure;
Fig. 6 shows a schematic diagram of the rolled-up state of the flexible display device provided according to an embodiment of the present disclosure;
Fig. 7 shows a schematic diagram of the internal structure of the winding side of the flexible display device provided according to an embodiment of the present disclosure;
Fig. 8 shows a schematic diagram of the structure of the roller of the flexible display device provided according to an embodiment of the present disclosure;
Fig. 9 shows a schematic diagram of a separate winding embodiment of a flexible display panel and a flexible support structure according to the present disclosure;
Fig. 10 shows a curve of the separation force between the flexible display panel and the flexible support structure as a function of the separation angle provided according to an embodiment of the present disclosure.

### DETAILED DESCRIPTION OF THE DISCLOSURE

In the following, the technical solutions in the embodiments of the disclosure will be described clearly and completely in connection with the drawings in the embodiments of the disclosure. Obviously, the described embodiments are only part of the embodiments of the disclosure, and not all of the embodiments. Based on the embodiments in the disclosure, all other embodiments obtained by those of ordinary skills in the art under the premise of not paying out creative work pertain to the protection scope of the disclosure.

A flexible screen of a windable flexible display device is arranged in a housing. When the flexible screen is pulled out of the housing, it will bend under its own bending force, and the display screen cannot maintain a flat and unfolded state. Therefore, the image displayed on the display screen will be distorted, which is not conducive to user viewing. Besides, due to the lack of support on the back of the flexible screen, when users perform touch operations on the flexible screen, the flexible screen will bend, which is not conducive to user operation.

The related technology proposes a combination of separated winding display screen and support, which uses a structure similar to zipper engagement on the upper and lower borders to achieve the switching between flattening combination and winding separation. The disadvantage is that the engagement structure is only on the upper and lower edges, and the degree of improvement for the arching in the middle of the screen is limited.

The disclosure provides a flexible support structure, the flexible support structure comprises a suction layer with suction cup microstructures. In the wound state, the flexible display panel and the flexible support structure are wound on two scrolls, respectively. When the flexible display panel is unfolded, the suction layer of the flexible support structure sucks the entire surface of the flexible display panel, improving the flatness of the flexible display panel and providing reliable support for the flexible display panel.

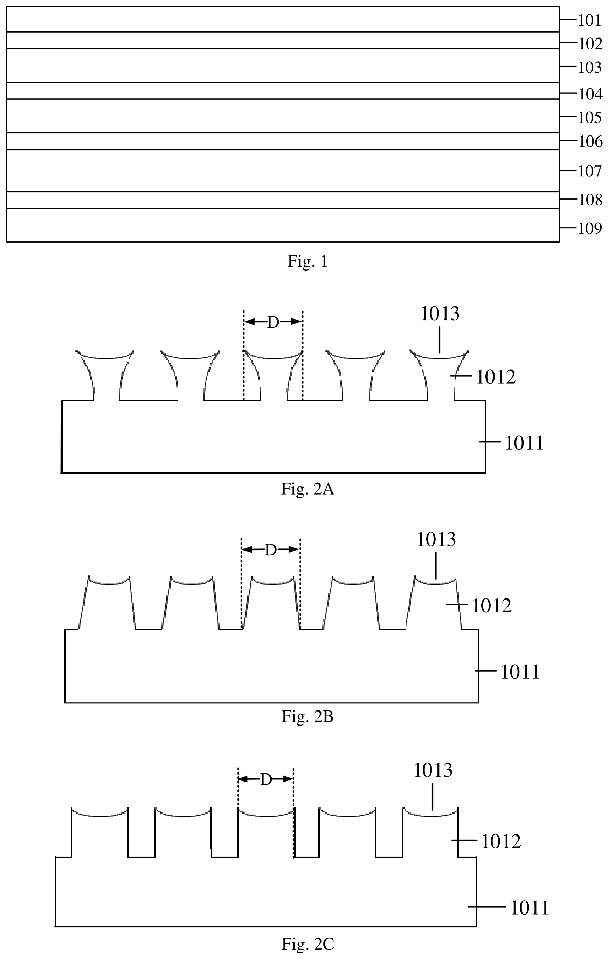

Fig. 1 shows a schematic cross-sectional view of a flexible support structure provided according to an embodiment of the present disclosure. As shown in Fig. 1, the flexible support structure provided in the disclosure comprises a substrate layer 105 and a suction layer 101 disposed on the substrate layer 105. Figs. 2A-2G show schematic cross-sectional views of the suction layer of the flexible support structure provided according to embodiments of the present disclosure, the base 1011 is on the side of the suction layer 101 facing the substrate layer. As shown in Figs. 2A-2G, the suction layer 101 comprises a base 1011 and a plurality of suction cup microstructures 1012 protruding from the base 1011 in a direction away from the substrate layer, each suction cup microstructure 1012 has a concave portion 1013 concaving toward the substrate layer at an end away from the base 1011.

By arranging the plurality of suction cup microstructures 1012 on the suction layer 101, it is possible to achieve entire surface suction on the flexible display panel, improve the flatness of the flexible display panel, and provide reliable support for the flexible display panel. Each suction cup microstructure 1012 is provided with a concave portion 1013, which can form vacuum negative pressure suction through compression, and can repeat the suction and separation process without losing adhesive force.

In some embodiments, as shown in Fig. 2A, the size of the end of the suction cup microstructure 1012 away from the base 1011 is larger than the size of the end of the suction cup microstructure 1012 near the base 1011 (hereinafter referred to as the case of "wide top and narrow bottom"). Optionally, the side surface of the suction cup microstructure 1012 may be curved (as shown in Fig. 2A), flat or other shapes. In some embodiments, as shown in Fig. 2B, the size of the end of the suction cup microstructure 1012 away from the base 1011 is smaller than the size of the end of the suction cup microstructure 1012 near the base 1011 (hereinafter referred to as the case of "narrow top and wide bottom"). Optionally, the side of the suction cup microstructure 1012 may be flat (as shown in Fig. 2B), curved or other shapes. In some embodiments, as shown in Figs. 2C-2G, the suction cup microstructure 1012 has a constant size in the direction perpendicular to the base 1011 (hereinafter referred to as the case of " top and bottom of same width").

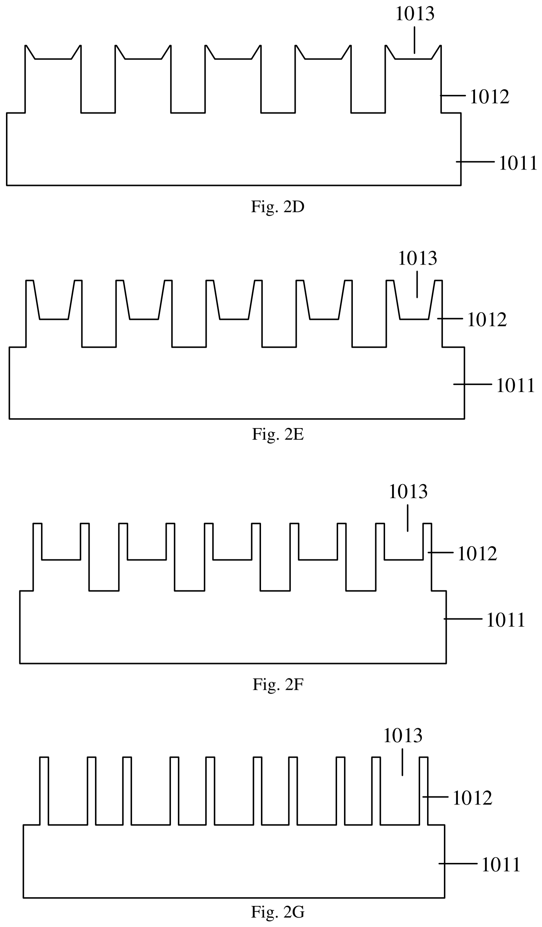

As shown in Figs. 2A-2C, the concave portion 1013 of the suction cup microstructure 1012 may be curved; As shown in Figs. 2D-2G, the concave portion 1013 of the suction cup microstructure 1012 may be composed of a flat bottom wall and a side wall. For the case where the concave portion of the suction cup microstructure 1012 is composed of a planar bottom wall and a side wall, the cross-section of the concave portion can be trapezoidal (as shown in Fig. 2D and Fig. 2E), rectangular (as shown in Fig. 2F and Fig. 2G), or other shapes. For the case where the cross-section of the concave portion is trapezoidal or arc-shaped, the orthographic projection of the concave portion 1013 on the base 1011 may be within the orthographic projection of the suction cup microstructure 1012 on the base 1011 (as shown in Figs. 2E, 2F, and 2G), or the orthographic projection of the concave portion on the base 1011 may coincide with the orthographic projection of the suction cup microstructure 1012 on the base 1011 (as shown in Figs. 2A, 2B, 2C, and 2D).

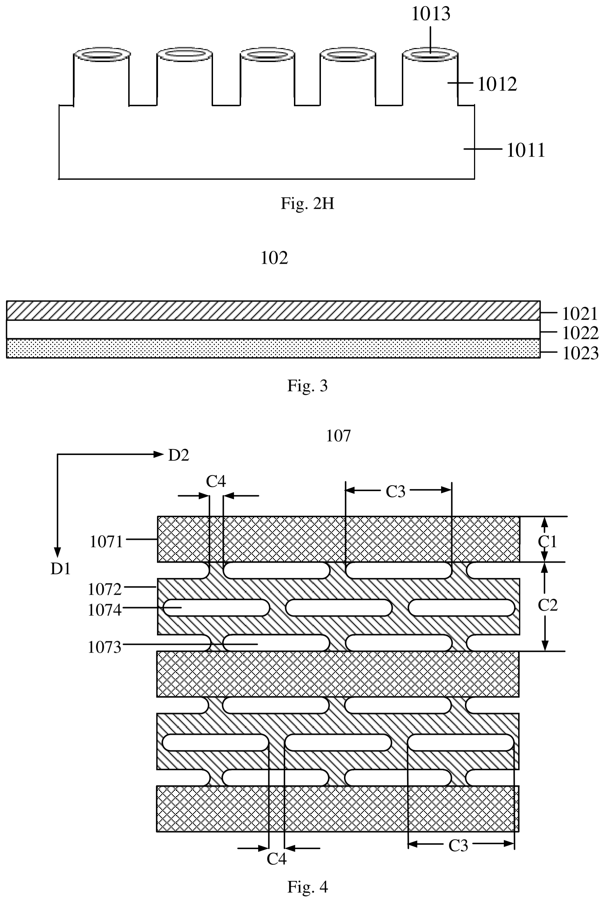

In some embodiments, as shown in Figs. 2A-2F, the depth of the concave portion 1013 of the suction cup microstructure 1012 may be smaller than the height of the suction cup microstructure 1012, that is, the concave portion 1013 is only located in a portion of the suction cup microstructure 1012, and the suction cup microstructure 1012 is not hollow. In some embodiments, as shown in Fig. 2G, the depth of the concave portion 1013 of the suction cup microstructure 1012 is equal to the height of the suction cup microstructure 1012, that is, the concave portion 1013 penetrates the entire suction cup microstructure 1012, and the suction cup microstructure 1012 is hollow. Fig. 2H shows a schematic diagram of the suction layer of the flexible support structure provided according to an embodiment of the present disclosure. The suction cup microstructure 1012 in Fig. 2H is a hollow cylinder, and the depth of the concave portion 1013 may be smaller than the height of the suction cup microstructure 1012 (as shown in Fig. 2F) or equal to the height of the suction cup microstructure 1012 (as shown in Fig. 2G).

It can be understood that the structure of the concave portion 1013 of Figs. 2D-2G may also be applied to the suction cup microstructure 1012 with a wide top and narrow bottom shown in Fig. 2A or the suction cup microstructure 1012 with a narrow top and wide bottom shown in Fig. 2B, which will not be repeated herein.

The suction layer 101 of the flexible support structure disclosed herein may be made of silicone or rubber material, with an elastic modulus of 1MPa-10MPa, such as 1MPa, 3MPa, 5MPa, 7MPa, 9MPa, 10MPa, and a thickness of 50µm-200µm, such as 50µm, 80µm, 100µm, 150µm, 200µm.

In some embodiments, the outer diameter of each suction cup microstructure 1012 may be 20µm-100µm, such as 20µm, 40µm, 60µm, 80µm, or 100µm, and the center distance between adjacent suction cup microstructures 1012 may be 50µm-150µm, such as 50µm, 80µm, 100µm, 120µm, or 150µm. Herein, the "outer diameter of the suction cup microstructure" refers to the maximum size of the suction cup microstructure 1012 in the direction parallel to the base 1011. In Figs. 2A, 2B, and 2C, the letter D indicates the outer diameter of the suction cup microstructure 1012 in three cases: wide top and narrow bottom, narrow top and wide bottom, top and bottom of same width; The center distance between adjacent suction cup microstructures refers to the distance between the centers of two adjacent suction cup microstructures 1012.

For the case where the orthographic projection of the concave portion 1013 on the base 1011 is within the orthographic projection of the suction cup microstructure 1012 on the base 1011 (as shown in Figs. 2E, 2F, and 2G), the wall thickness of the side wall of the suction cup microstructure is greater than 15 µm, such as 16 µm, 18 µm, and 20 µm, to ensure the strength of the suction cup microstructure.

In some embodiments, the plurality of suction cup microstructures 1012 are uniformly distributed throughout the entire suction layer. It should be noted that the suction layer 101 disclosed in the disclosure may be uniformly arranged with suction cup microstructures 1012 of the same structure on the entire surface, or suction cup microstructures 1012 of different structures may be arranged in different regions, which is not limited in the disclosure.

It should be noted that Figs. 2A-2H provide some specific embodiments of the suction cup microstructure, but this disclosure is not limited to this. As long as the suction cup microstructure 1012 is provided with a concave portion 1013 at the end away from the base 1011, which can form vacuum negative pressure suction during compression, it is sufficient. All other embodiments obtained by those of ordinary skill in the art without creative work are within the scope of protection of the disclosure.

In some embodiments, as shown in Fig. 1, the flexible support structure provided by the present disclosure may further comprise a spacer layer 103 arranged between the substrate layer 105 and the suction layer 101. The spacer layer 103 may be a flat film made of foam, PET or PI, with a thickness of 25µm-100µm, such as 25µm, 40µm, 60µm, 80µm, 100µm. By arranging a spacer layer, the surface flatness of flexible support structure can be effectively improved.

In some embodiments, as shown in Fig. 1, the flexible support structure provided by the present disclosure may further comprise a first bonding layer 102 arranged between the suction layer 101 and the spacer layer 103. Fig. 3 shows a schematic cross-sectional view of the first bonding layer of the flexible support structure provided according to an embodiment of the disclosure. As shown in Fig. 3, the first bonding layer 102 may comprise: a silicon-based adhesive film 1021, the silicon-based adhesive film is in direct contact with the suction layer, and the peeling force between the silicon-based adhesive film 1021 and the suction layer is greater than 1200gf/25mm, such as 1300gf/25mm, 1400gf/25mm, 1500gf/25mm; a PET film layer 1022 arranged on the side of the silicon-based adhesive film 1021 facing away from the suction layer; and an acrylic adhesive film 1023 arranged on the side of the PET film layer 1022 away from the silicon-based adhesive film 1021 and in direct contact with the spacer layer. The thickness of the first bonding layer 102 according to the disclosed embodiment may be 30µm-100µm, such as 30µm, 45µm, 60µm, 75µm, 90µm, and 100µm. By arranging a three-layer structure for the first bonding layer, different adhesive materials can be arranged according to the specific materials of the suction layer 101 and the spacer layer 103 they are bonded to, thereby achieving better bonding effects. The peeling force between the silicon-based adhesive film 1021 of the first bonding layer 102 and the suction layer 101 is greater than 1200gf/25mm, making the suction layer 101 strong enough to avoid detachment during repeated suction and separation with the flexible display panel.

In some embodiments, as shown in Fig. 1, the flexible support structure provided by the present disclosure may further comprise a mesh plate layer 107 arranged on the side of the substrate layer 105 away from the suction layer 101. Fig. 4 shows a top view schematic of the mesh plate layer of the flexible support structure provided according to an embodiment the of disclosure. As shown in Fig. 4, the mesh plate layer 107 may comprise: a plurality of strip-shaped portions 1071 arranged at intervals along a first direction D1, each strip-shaped portion 1071 extending along a second direction D2 perpendicular to the first direction D1 being the winding direction of the flexible support structure; a plurality of connecting portions 1072 arranged between adjacent strip-shaped portions 1071 for connecting adjacent strip-shaped portions 1071; a plurality of first openings 1073 arranged between adjacent strip-shaped portions 1071 and connecting portions 1072, each first opening 1073 extending along a second direction D2; and a plurality of second openings 1074 arranged in the plurality of connecting portions 1072, each second opening extending along a second direction D2, the plurality of second openings 1074 being staggered with the plurality of first openings 1071.

With above configuration of the mesh plate layer 107, the strip-shaped portions 1071 can provide sufficient strength for the flexible support structure, while the connecting portions 1072, the first openings 1073 and the second openings 1074 can provide sufficient flexibility for the mesh plate layer 107, thereby facilitating the operation of winding and unfolding the flexible support structure along the first direction.

In some embodiments, as shown in Fig. 4, the width C1 of each strip-shaped portion 1071 in the first direction D1 may be 0.4mm-1.0mm, such as 0.4mm, 0.5mm, 0.6mm, 0.7mm, 0.8mm, 0.9mm, 1.0mm, and the spacing C2 between adjacent strip-shaped portions 1071 may be 1.0mm-2.0mm, such as 1.0mm, 1.2mm, 1.4mm, 1.6mm, 1.8mm, 2.0mm.

In some embodiments, the side of the connecting portions 1072 away from the substrate layer 105 may be etched, and the thickness of the connecting portions 1072 after etching may be 40%-50% of the thickness of the strip-shaped portions 1071, that is, the connecting portions 1072 are partially etched. The partially etched connecting portions can further increase the flexibility of the mesh plate layer, thereby increasing the flexibility of the flexible support structure.

In some embodiments, as shown in Fig. 4, the length C3 of the first openings 1073 in the second direction D2 may be 6mm-14mm, such as 6mm, 8mm, 10mm, 12mm, 14mm, and the length C3 of the second openings 1074 in the second direction D2 may also be 6mm-14mm, such as 6mm, 8mm, 10mm, 12mm, 14mm. Fig. 4 illustrates that the first openings 1073 and the second openings 1074 have the same length C3, which does not represent a limitation of the present disclosure. In specific embodiments, the lengths of the first opening 1073 and the second opening 1074 may be the same or different. Moreover, Fig. 4 only schematically illustrates the shapes of the first openings 1073 and the second openings 1074. In specific embodiments, the shapes of the first openings 1073 and the second openings 7074 may be the same or different, and shapes different from the shapes of the first openings 1073 and the second openings 1074 shown in Fig. 4 may be arranged, as long as they are elongated openings extending along the second direction D2.

In some embodiments, as shown in Fig. 4, the width C4 of the connecting portion 1072 between adjacent two first openings 1073 may be 0.2mm-0.5mm, such as 0.2mm, 0.3mm, 0.4mm, 0.5mm, and the width C4 of the connecting portion 1072 between adjacent two second openings 1074 may be 0.2mm-0.5mm, such as 0.2mm, 0.3mm, 0.4mm, and 0.5mm. Fig. 4 schematically illustrates that the width of the connecting portion 1072 between adjacent first openings 1073 is the same as the width of the connecting portion 1072 between adjacent second openings 1074. In specific embodiments, the width of the connecting portion 1072 between adjacent first openings 1073 and the width of the connecting portion 1072 between adjacent second openings 1074 may be the same or different.

The material of the mesh plate layer provided in the disclosure may be stainless steel or titanium alloy, with a tensile strength greater than 450MPa, such as 500MPa, 550MPa, 600MPa, 650MPa, 700MPa, and a thickness of 0.1mm-0.4mm, such as 0.1mm, 0.2mm, 0.3mm, and 0.4mm. In the process of preparing the mesh plate layer, the connecting portions, the first openings and the second openings may be etched by etching or laser technology, wherein the connecting portions is partially etched, and the first openings and the second openings are completely etched.

In some embodiments, as shown in Fig. 1, the flexible support structure provided by the present disclosure may further comprise a protective layer 109 arranged on the side of the substrate layer 105 away from the suction layer 101. The protective layer 109 may be a foam material with a flat surface, with a thickness of 30µm-100µm, such as 30µm, 40µm, 60µm, 80µm, 90µm, and 100µm. By arranging a protective layer 109, the flexible support structure is prevented from being damaged during winding due to friction between the layers.

In addition, as shown in Fig. 1, the flexible support structure provided by the present disclosure may further comprise a second bonding layer 104 arranged between the substrate layer 105 and the spacer layer 103, a third bonding layer 106 arranged between the substrate layer 105 and the mesh plate layer 107, and a fourth bonding layer 108 arranged between the mesh plate layer 107 and the protective layer 109. The second bonding layer 104, the third bonding layer 106, and the fourth bonding layer 108 may be acrylic double-sided adhesive layers with a thickness of 25µm-50µm, such as 25µm, 30µm, 35µm, 40µm, 45µm, and 50µm.

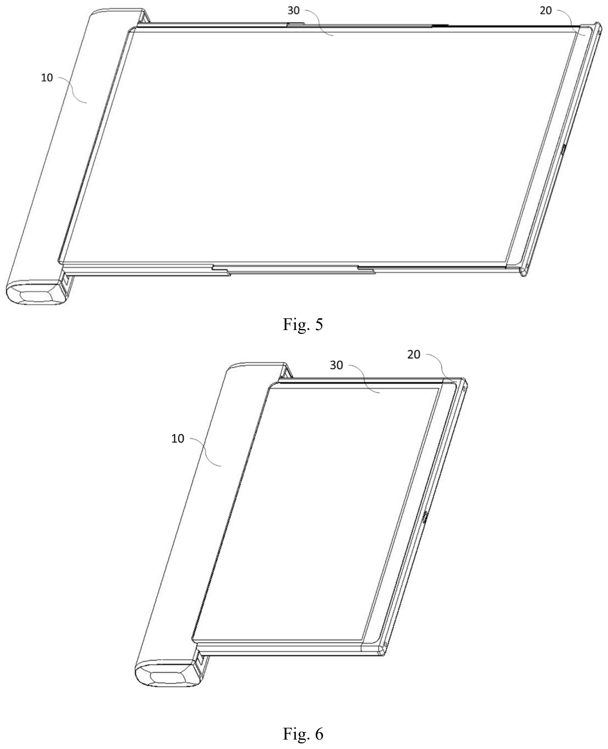

According to another aspect of the present disclosure, a flexible display device is provided. Fig. 5 shows a schematic diagram of the unfolded state of the flexible display device provided according to an embodiment of the disclosure, and Fig. 6 shows a schematic diagram of the rolled-up state of the flexible display device provided according to an embodiment of the disclosure, wherein reference number 30 indicates the flexible display panel, reference number 10 indicates the winding side of the flexible display device, and when the flexible display device is rolled-up, the flexible display panel is wound up on that side; reference number 20 indicates the fixed side of the flexible display device, an end of the flexible display panel is fixed to the fixed side.

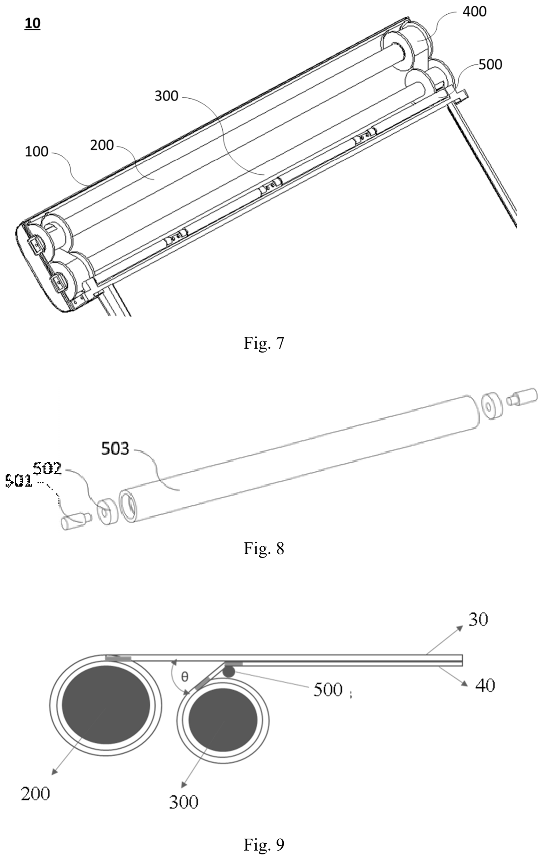

Fig. 7 shows a schematic diagram of the internal structure of the winding side of the flexible display device provided according to an embodiment of the present disclosure. As shown in Figs. 5, 6, and 7, the flexible display device provided by the present disclosure comprises: a housing 100, provided with an opening; a first scroll 200, rotatably arranged in the housing 100; a second scroll 300, rotatably arranged in the housing 100, the second scroll 300 being parallel and spaced apart from the first scroll 200; a flexible display panel 30, a first end of the flexible display panel 30 being connected to the first scroll 200 and wound around the first scroll 200; and a flexible support structure according to any one of foregoing embodiments, wherein a first end of the flexible support structure is connected to the second scroll 300 and wound around the second scroll 300; wherein the flexible display panel and the flexible support structure are configured to make the suction layer of the flexible support structure gradually adhere to the flexible display panel to support and suck the flexible display panel when the flexible display panel and the flexible support structure unfolded from the opening to the outside of the housing.

As shown in Fig. 7, the flexible display device provided by the present disclosure may further comprise a roller group 500 arranged at a junction of a winding area and a flattening area, wherein the roller group 500 is configured to uniformly suck the suction layer of the flexible support structure and the entire surface of the flexible display panel by rolling the roller group 500 when the flexible display panel and the flexible support structure unfolded from the opening to the outside of the housing 100.

By arranging the roller group, it is possible to ensure that the flexible display panel is uniformly sucked by the suction layer of the support structure during the process of pulling out and unfolding the flexible display panel, ensuring the flatness of the display surface. In addition, during the winding process of the flexible display panel, the sliding friction between the flexible display panel and the flexible support structure can be reduced by rotating the roller.

The roller group can adopt a multi section design, which comprises a plurality of rollers arranged in a direction parallel to the first scroll and the second scroll. Arranging the plurality of rollers can prevent compression deformation due to excessive length.

Fig. 8 shows a schematic diagram of the structure of the roller of the flexible display device provided according to an embodiment of the present disclosure. As shown in Fig. 8, a roller may comprise a positioning shaft 501, a ball bearing 502, and a drum 503. One end of the positioning shaft 501 is embedded in the bearing and the other end is fixed to the housing to achieve axial positioning of the roller; the ball bearing 502 is embedded in the drum 503 to reduce the frictional force during the rotation of the drum 503; the drum 503 may be made of POM or metal material with low friction coefficient.

As shown in Fig. 7, the flexible display device provided by the present disclosure may further comprise constant torque torsion spring components 400 arranged at both ends of the first scroll 200 and the second scroll 300, which can provide constant torque for the winding of the flexible display panel and the support structure.

Fig. 9 shows a schematic diagram of a separate winding embodiment of a flexible display panel and a flexible support structure according to the present disclosure. When the flexible display panel 30 and the flexible support structure 40 are unfolded from the opening to the outside of the housing, excessive suction force may produce suction marks, and insufficient suction force may cause bulges when the flexible display panel cannot be fully sucked. By adjusting the position of the roller group 500 in the direction perpendicular to the flexible display panel 30, the suction force between the flexible display panel 30 and the flexible support structure 40 can be controlled. When the flexible display panel 30 and the flexible support structure 40 are wound up from the opening into the housing, the separation angle θ between the flexible display panel 30 and the flexible support structure 40 can be controlled by adjusting the position of the roller group 500 in a direction parallel to the flexible display panel 30, thereby controlling the separation force between the flexible display panel and the flexible support structure.

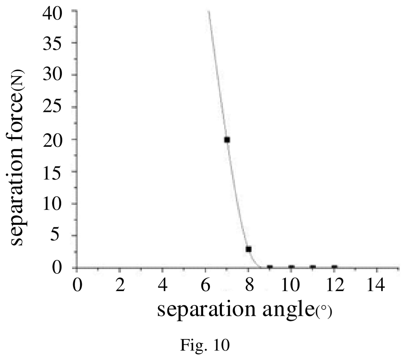

Fig. 10 shows a curve of the separation force between the flexible display panel and the flexible support structure as a function of the separation angle provided according to an embodiment of the present disclosure. As shown in Fig. 10, the separation force between the flexible display panel and the flexible support structure decreases significantly with increasing separation angle. When the separation angle is greater than 10 degrees, the vacuum negative pressure suction state of the micro suction cup can disappear, and the separation force between the flexible display panel and the flexible support structure is close to zero, which can avoid damage to the flexible display panel.

The flexible display device provided in the disclosure, by arranging a flexible support structure with a suction layer and achieving the combination or separation of the flexible display panel and the flexible support structure through rolling, has the following beneficial technical effects compared to related art.

The flexible display device provided in the disclosure can uniformly suck the entire surface of the flexible display panel and the flexible support structure, achieve surface fixation, and improve the flatness of the flexible display panel when unfolded. In related art, a zipper like engagement structure is used, which is only on the upper and lower edges and has limited improvement on the arching in the middle of the screen. The suction layer used in the disclosure is provided with biomimetic suction cup microstructures, and the thickness of the entire suction layer can be below 100µm. In related art, locking grooves and convex block structures are used to achieve the unfolding of the winded panel, which requires at least 2mm thickness to ensure normal coupling, which will inevitably increase the thickness of the entire display device, which is not conducive to the thinning of the product. When the flexible display panel and the flexible support structure are separated, the separation force of the display device provided in the disclosure will significantly decrease to nearly 0 as the separation angle increases. The hard separation of the locking groove in related art causes the flexible display panel to be subjected to greater pulling force and uneven force, which can easily cause damage to the flexible display panel. The flexible display device provided in the disclosure only requires a roller to lightly roll the flexible display panel and the flexible support structure to achieve uniform suction of the entire surface of the flexible display panel and the flexible support structure. The locking groove structure requires a greater pressing force to firmly bond the locking groove, the pressing process may cause damage to the flexible display panel, and once there is displacement or deviation, it may not be able to be pressed together.

In the drawings, for clarity, the thickness of certain areas and layers may have been exaggerated. The same reference signs in the drawings indicate the same or similar structures, therefore their detailed descriptions will be omitted. The described features, structures, or characteristics may be combined in any suitable manner in one or more embodiments. In the description of the disclosure, many specific details are provided to provide a thorough understanding of the embodiments disclosed herein. However, those skilled in the art will appreciate that the disclosed technical solution may be practiced without one or more of the specific details described, or other methods, components, materials, etc. may be employed. In other cases, well-known structures, materials, or operations are not shown or described in detail to avoid blurring the main technical ideas of the disclosure

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another. Thus, a first element, component, region, layer or section discussed below could be termed a second element, component, region, layer or section without departing from the teachings of the present invention.

Spatially relative terms, such as "row"," column", "below", "above", "left", "right" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" or "under" other elements or features would then be oriented "above" the other elements or features. Thus, the exemplary terms "below" and "under" can encompass both an orientation of above and below. The device may be otherwise oriented (rotated 90 degrees or at other orientations) and the spatially relative descriptors used herein interpreted accordingly. In addition, it will also be understood that when a layer is referred to as being "between" two layers, it can be the only layer between the two layers, or one or more intervening layers may also be present.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. In the description of the specification, the reference to the terms "one embodiment", "another embodiment", etc. means that the specific features, structures, materials, or characteristics described in conjunction with that embodiment are included in at least one embodiment disclosed herein. In the specification, the schematic expressions of the above terms do not necessarily refer to the same embodiments or examples. Moreover, the specific features, structures, materials, or characteristics described can be combined in any one or more embodiments or examples in an appropriate manner. In addition, those skilled in the art can combine the different embodiments or examples described in the specification, as well as the features of different embodiments or examples, without conflicting with each other

It will be understood that when an element or layer is referred to as being "on", "connected to", "coupled to", or "adjacent to" another element or layer, it can be directly on, connected, coupled, or adjacent to the other element or layer, or intervening elements or layers may be present. In contrast, when an element is referred to as being "directly on," "directly connected to", "directly coupled to", or "immediately adjacent to" another element or layer, there are no intervening elements or layers present. In no event, however, should "on" or "directly on" be construed as requiring a layer to completely cover an underlying layer.

Embodiments of the invention are described herein with reference to schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing. Accordingly, the regions illustrated in the figures are schematic in nature and their shapes are not intended to illustrate the actual shape of a region of a device and are not intended to limit the scope of the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

As will be understood by those skilled in the art, although the various steps of the method disclosed in the disclosure are described in a specific order in the drawings, this does not require or imply that these steps must be performed in that specific order, unless otherwise explicitly stated in the context. Additional or replaceable, multiple steps can be merged into one step for execution, and/or a step can be decomposed into multiple steps for execution. In addition, other method steps can be inserted between the steps. The insertion steps can represent improvements to methods such as those described in the article, or they can be unrelated to the method. Furthermore, the given step may not have been fully completed before the next step begins.

The above embodiments are only used for explanations rather than limitations to the present disclosure, the ordinary skilled person in the related technical field, in the case of not departing from the spirit and scope of the present disclosure, may also make various modifications and variations, therefore, all the equivalent solutions also belong to the scope of the present disclosure, the patent protection scope of the present disclosure should be defined by the claims.

## Claims

1. A flexible support structure, for supporting and sucking a flexible display panel when the flexible display panel is unfolded, the flexible support structure comprising a substrate layer and a suction layer disposed on the substrate layer,
wherein the suction layer comprises a base and a plurality of suction cup microstructures protruding from the base in a direction away from the substrate layer, each suction cup microstructure having a concave portion concaving toward the substrate layer at an end away from the base.

2. The flexible support structure according to claim 1, wherein a size of the suction cup microstructure at the end away from the base is larger than a size of the suction cup microstructure at an end close to the base, or the size of the suction cup microstructure at the end away from the base is smaller than the size of the suction cup microstructure at the end close to the base, or the suction cup microstructure has a constant size in a direction perpendicular to the base.

3. The flexible support structure according to claim 1, wherein a depth of the concave portion of the suction cup microstructure is less than or equal to a height of the suction cup microstructure.

4. The flexible support structure according to claim 1, wherein the suction layer is made of silicone or rubber material, with an elastic modulus of 1MPa-10MPa and a thickness of 50µm-200µm.

5. The flexible support structure according to claim 1, wherein an outer diameter of each suction cup microstructure is 20µm-100µm, and a center distance between adjacent suction cup microstructures is 50µm-150µm.

6. The flexible support structure according to claim 1, wherein the plurality of suction cup microstructures are uniformly distributed throughout the entire suction layer.

7. The flexible support structure according to claim 1, further comprising a spacer layer arranged between the substrate layer and the suction layer, wherein the spacer layer is made of foam, PET film or PI film, and has a thickness of 25µm-100µm.

8. The flexible support structure according to claim 7, further comprising a first bonding layer arranged between the suction layer and the spacer layer, wherein a thickness of the first bonding layer is 30µm-100µm.

9. The flexible support structure according to claim 8, wherein the first bonding layer comprises:
a silicon-based adhesive film, the silicon-based adhesive film being in direct contact with the suction layer, and has a peeling force greater than 1200gf/25mm between the silicon-based adhesive film and the suction layer;
a PET film layer, arranged on a side of the silicon-based adhesive film facing away from the suction layer; and
an acrylic adhesive film is arranged on a side of the PET film layer facing away from the silicon-based adhesive film and in direct contact with the spacer layer.

10. The flexible support structure according to claim 1, further comprising a mesh plate layer arranged on a side of the substrate layer away from the suction layer.

11. The flexible support structure according to claim 10, wherein the mesh plate layer comprises:
a plurality of strip-shaped portions arranged at intervals along a first direction, with each strip-shaped section extending along a second direction perpendicular to the first direction, the first direction being the winding direction of the flexible support structure;
a plurality of connecting portions arranged between adjacent strip-shaped portions for connecting adjacent strip-shaped portions;
a plurality of first openings arranged between adjacent strip-shaped portions and connecting portions, each first opening extending along a second direction; and
a plurality of second openings arranged in the plurality of connecting portions, each second opening extending along a second direction, the plurality of second openings being staggered with the plurality of first openings.

12. The flexible support structure according to claim 11, wherein a width of each strip-shaped portion in the first direction is 0.4mm-1.0mm, and a spacing between adjacent strip-shaped portions is 1.0mm-2.0mm.

13. The flexible support structure according to claim 11 or 12, wherein a side of the connecting portion facing away from the substrate layer is etched, and a thickness of the connecting portion is 40% -50% of a thickness of the strip-shaped portion.

14. The flexible support structure according to claim 11 or 12, wherein a length of the first opening in the second direction is 6mm-14mm, and a length of the second opening in the second direction is 6mm-14mm.

15. The flexible support structure according to claim 14, wherein a width of the connecting portion between adjacent two first openings is 0.2mm-0.5mm, and a width of the connecting portion between adjacent two second openings is 0.2mm-0.5mm.

16. The flexible support structure according to claim 10, wherein a material of the mesh plate layer is stainless steel or titanium alloy, the tensile strength is greater than 450MPa, and the thickness is 0.1mm-0.4mm.

17. The flexible support structure according to claim 1, further comprising a protective layer arranged on a side of the substrate layer away from the suction layer.

18. The flexible support structure according to claim 17, wherein the protective layer is made of foam material with a thickness of 30µm-100µm.

19. A flexible display device, comprising:
a housing, provided with an opening;
a first scroll, rotatably arranged in the housing;
a second scroll, rotatably arranged in the housing, the second scroll being parallel and spaced apart from the first scroll;
a flexible display panel, a first end of the flexible display panel being connected to the first scroll and wound around the first scroll; and
a flexible support structure according to any one of claims 1-18, wherein a first end of the flexible support structure is connected to the second scroll and wound around the second scroll;
wherein the flexible display panel and the flexible support structure are configured to make the suction layer of the flexible support structure gradually adhere to the flexible display panel to support and suck the flexible display panel when the flexible display panel and the flexible support structure unfolded from the opening to the outside of the housing.

20. The flexible display device according to claim 19, further comprising a roller group arranged at a junction of a winding area and a flattening area, wherein the roller group is configured to uniformly suck the suction layer of the flexible support structure and the entire surface of the flexible display panel by rolling the roller group when the flexible display panel and the flexible support structure unfolded from the opening to the outside of the housing.

21. The flexible display device according to claim 20, wherein the roller group is further configured to control the adhesion force between the flexible display panel and the flexible support structure by adjusting the position of the roller group in a direction perpendicular to the flexible display panel when the flexible display panel and the flexible support structure are unfolded from the opening to the outside of the housing.

22. The flexible display device according to claim 21, wherein the roller group is further configured to control the separation angle between the flexible display panel and the flexible support structure by adjusting the position of the roller group in a direction parallel to the flexible display panel when the flexible display panel and the flexible support structure are rolled up from the opening into the housing, thereby controlling the separation force between the flexible display panel and the flexible support structure.

23. The flexible display device according to claim 22, wherein when the flexible display panel and the flexible support structure are rolled up from the opening into the housing, the separation angle between the flexible display panel and the flexible support structure is greater than 10 degrees.

24. A flexible display device according to any one of claims 20-23, wherein the roller group comprises a plurality of rollers arranged in a direction parallel to the first scroll and second scroll.

25. The flexible display device according to claim 24, wherein a material of the rotary drums of the plurality of rollers is POM or metal.
